# EUROPEAN PATENT SPECIFICATION

(11) **EP 0 831 225 B1**
(45) Date of publication and mention of the grant of the patent: **07.05.2003**
(21) Application number: 97116180.7
(22) Date of filing: 17.09.1997
(51) Int. Cl.: F02D 41/38, F02D 41/04, F02D 41/10

(54) **Fuel injection apparatus**
Kraftstoffeinspritzvorrichtung
Dispositif d'injection de carburant

(30) Priority: 18.09.1996 JP 24621196
(43) Date of publication of application: 25.03.1998
(73) Proprietor: TOYOTA JIDOSHA KABUSHIKI KAISHA, Aichi (JP)
(72) Inventor: Ishisaka, Kazuyoshi, c/o Toyota Jidosha K.K., Toyota-shi, Aichi-ken 471 (JP)
(74) Representative: Pellmann, Hans-Bernd, Dipl.-Ing.

(56) References cited:
- EP-A- 0 363 958
- US-A- 4 572 132
- US-A- 4 993 389
- US-A- 5 452 698
- PATENT ABSTRACTS OF JAPAN vol. 017, no. 168 (M-1391), 31 March 1993 (1993-03-31) & JP 04 330349 A (NIPPONDENSO CO LTD), 18 November 1992 (1992-11-18)

## Description

The present invention relates to an apparatus for injecting fuel in an engine, and more particularly, to a fuel injection apparatus that controls the amount of fuel injection in accordance with the operating state of the engine.

A fuel injection apparatus injects fuel into the combustion chamber of an engine. A typical fuel injection apparatus employed in a gasoline engine is provided with a fuel injector. The injector injects fuel into the combustion chamber. A typical fuel injection apparatus employed in a diesel engine is provided with a fuel injection nozzle and a fuel injection pump that forces fuel toward the nozzle. The injection pump is driven in cooperation with the engine to force high pressure fuel toward the injection nozzle. The fuel is then injected into the combustion chamber through the injection nozzle. The amount and the injection timing of the fuel injected from either the injector or the injection nozzle must be controlled appropriately to obtain allowable engine emissions and to improve the driving performance of the engine.

Japanese Unexamined Patent Publication No. 4-330349 describes a typical fuel injection apparatus that is installed in a diesel engine. The aparatus incorporates a microcomputer to control the injection pump in accordance with the operating state of the engine. The computer reads detecting signals that correspond with parameters related to the operating state of the engine such as the engine speed and the degree of acceleration pedal depression. Based on these signals, the computer computes a basic injection amount through a predetermined program. The computer then controls the injection pump in correspondence with the basic injection amount and adjusts the amount of fuel injected from the injection nozzle. The computer controls the injection pump to suppress surging, which causes cyclic fluctuation of the engine speed, and stabilize the engine speed. More specifically, the computer computes instantaneous fluctuation of the engine speed based on the engine speed detected during the power stroke of a certain cylinder and the engine speed detected during the compression stroke of the following cylinder. The computer then computes a correction amount corresponding with the instantaneous fluctuation and corrects the basic injection amount to determine the amount of fuel injected in the next cylinder.

However, in the apparatus of the above publication, the basic injection amount is corrected in accordance with instantaneous fluctuation of the engine speed and not in accordance with the actual engine speed, or average engine speed. If the instantaneous fluctuation of the engine speed is the same during alteration of the engine speed, the basic injection amount should be changed accordingly. When the engine speed is altered drastically in this apparatus, the basic injection amount cannot be corrected in accordance with the engine speed. This delays the stabilization of the engine speed fluctuation.

In an automobile engine, an abrupt increase of the engine torque during acceleration of the engine speed may cause resonance in the automobile's drive system (such as the drive shaft and the drive wheels). Such resonance may result in jerking, surges, or backing of the vehicle. If resonance occurs in the drive system, the timing for the correction of the fuel injection amount may not coincide with the phase of the cyclic fluctuation of the engine speed. In this case, stabilization of the engine speed fluctuation may become even more difficult.

Accordingly, it is an objective of the present invention to provide a fuel injection apparatus that readily stabilizes fluctuations of the engine speed.

To achieve the above objective, the present invention provides a fuel injection apparatus for controlling the amount of fuel that is injected into an engine from an injecting means. The apparatus includes detecting means for detecting the engine apeed. A first computing means computes the basic injection amount in accordance with the detected engine speed. A control means controls the injecting means in accordance with the computed basic injection amount. The apparatus further includes a second computing means for computing a maximum engine speed from the engine speed detected when the engine speed starts to decrease. A first correcting means corrects the computed basic injection amount from a difference between the maximum engine speed and the detected engine speed during a period when the detected engine speed begins to decrease from the maximum engine speed until when the engine speed begins to increase.

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a diagrammatic drawing showing an electronic control type diesel engine system;
Fig. 2 is a cross-sectional view showing the structure of the injection pump;
Fig. 3 is a front view showing the structure of an engine speed sensor;
Fig. 4 (a) is a time chart showing the rotation of the crankshaft;
Fig. 4(b) is a time chart showing the phases of the pulse signals in relationship with the time chart of Fig. 4(a);
Fig. 5 is a flowchart showing the fuel injection control routine;
Fig. 6 is a flowchart that continues from the flowchart of Fig. 5;
Fig. 7 is a flowchart that continues from the flowchart of Fig. 6;
Fig. 8 is a time chart showing the relationship between the engine speed (NE) and the average engine speed (NEA);
Fig. 9 is a time chart showing the relationship of parameters related to the behavior of the average engine speed (NEA);
Fig. 10 is a time chart showing the relationship of parameters related to the behavior of the average engine speed (NEA);
Fig. 11 is a graph showing the functional data of the parameters that are the speed correction amount (QACB) and the engine speed deviation (DLNES);
Fig. 12 is a graph showing the functional data of the parameters that are the exhaust gas amount (QACO) and the accelerating time (CQC);
Fig. 13(a) is a time chart showing the behavior of parameter QFIN;
Fig. 13(b) is a time chart showing the behavior of parameter NEA;
Fig. 13(c) is a time chart showing the behavior of parameter ACCP; and
Fig. 13(d) is a time chart showing the behavior of parameter CQC.

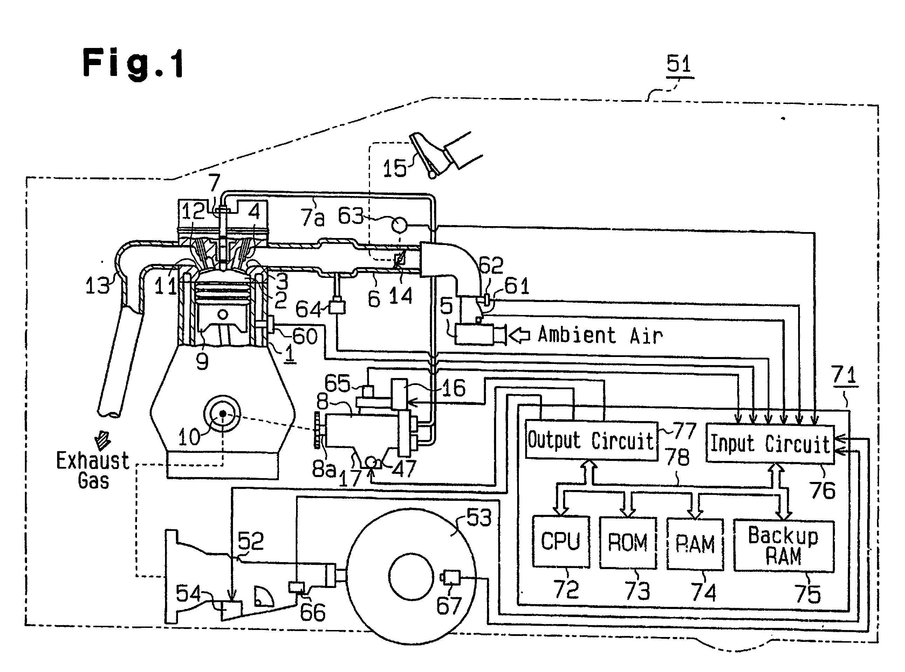

Fig. 1 is a diagrammatic drawing showing an electronic control type diesel engine 1. The diesel engine 1 is mounted on an automobile 51 and has a plurality of cylinders. A combustion chamber 2 is defined in each cylinder. Each cylinder is provided with an intake port 3, an intake valve 4, an injection nozzle 7, a piston 9, an exhaust port 11, and an exhaust valve 12. During the intake stroke, the intake valve 4 opens the intake port 3 and allows ambient air, which is drawn in through an intake passage 6 by way of an air cleaner 5, to flow into the combustion chamber 2. The injection nozzle 7 injects fuel, which is sent from fuel injection pump 8 by way of a fuel line 7, into the combustion chamber 2. The injection nozzles 7 and the injection pump 8 constitute an injecting means. The fuel drawn into each combustion chamber 2 is pressurized by the upward movement of the piston 9 during the power stroke. This ignites and burns the fuel. As a result, the piston 9 is moved downward to rotate the crankshaft 10 and generate the drive force of the engine 1. During the exhaust stroke, the exhaust valve 12 opens the exhaust port 11. This discharges the exhaust gas produced in the combustion chamber 2 into an exhaust passage 13. The exhaust gas is then emitted externally.

A throttle valve 14 is provided in the intake passage 6. The throttle valve 14 is operated in cooperation with the depression of an acceleration pedal 15 and selectively opens and closes the intake passage 6. The throttle valve 14 adjusts the amount of air drawn into the intake passage 6, or the intake air amount Q.

The injection pump 8 pressurizes and sends fuel to each injection nozzle 7 through the fuel line 7a so that the fuel may be burned in the associated combustion chamber 2. The injection pump 8 pressurizes the fuel from a fuel tank (not shown), and discharges the required amount of fuel at the required timing toward each injection nozzle 7. The injection nozzle 7 then injects fuel into the associated combustion chamber 2. An electromagnetic spill valve 16 is provided in the injection pump 8 to adjust the amount of fuel injected through each nozzle 7 every time the injection pump 8 discharges fuel. The spill valve 16 controls the timing to end the discharge of fuel from the injection pump 8 and adjust the amount of fuel injected from each injection nozzle 7. A timing device 17 is also provided in the injection pump 8 to adjust the timing for commencing the discharge of fuel from the pump 8, that is, the timing for injecting fuel from each nozzle 7. The spill valve 16 and the timing device 17 are electrically controlled. The injection pump 8 has a drive shaft 8a, which is connected to a crankshaft 10 of the engine 1. The drive shaft 8a is rotated synchronously with the crankshaft 10. Thus, the injection pump 8 is driven cooperatively with the engine 1.

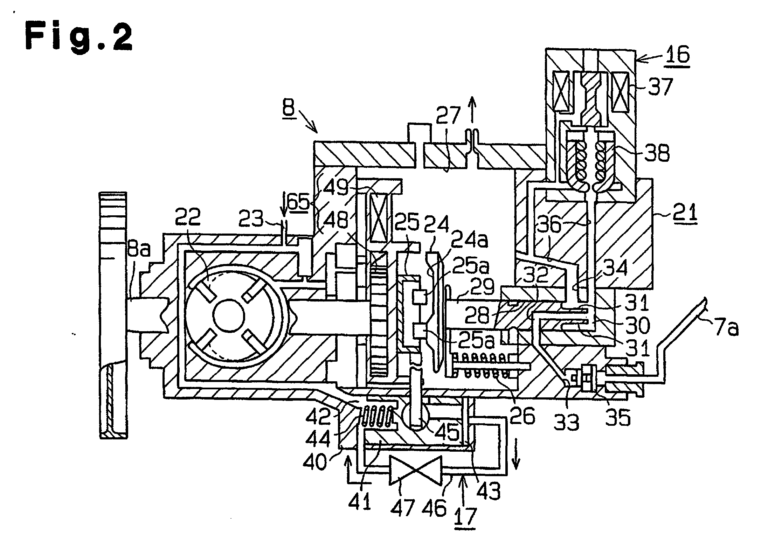

Fig. 2 shows the structure of the injection pump 8. The injection pump 8 has a housing 21. A fuel feed pump 22 (rotated 90 degrees in the drawing to facilitate description) is driven by the drive shaft 8a in the housing 21. The housing 21 also has a fuel port 23 that is connected to the feed pump 22.

The injection pump 8 includes a cam plate 24 and a roller ring 25. The cam plate 24 and the roller ring 25 are driven by the rotation of the drive shaft 8a to aid the discharge of fuel. The cam plate 24 is disk-like and coupled to the proximal end (right end as viewed in the drawing) of the drive shaft 8a by a coupling (not shown). A cam face 24a is defined on one side of the cam plate 24 with a plurality of lobes projecting therefrom. The roller ring 25 is opposed to the cam face 24a and has a plurality of cam rollers 25a arranged circumferentially. The number of lobes on the cam face 24a corresponds to the number of cylinders in the engine 1. A spring 26 arranged adjacent to the cam plate 24 urges the plate 24 so as to constantly engage the cam face 24a with the cam rollers 25a.

A fuel chamber 27 and a barrel 28 are provided in the housing 21. A plunger 29 is coupled integrally with the cam plate 24 and accommodated in the barrel 28. The rotating force of the drive shaft 8a is transmitted to the cam plate 24 by way of the coupling. This rotates the cam face 24a against the cam rollers 25a. Thus, the cam plate 24 reciprocates axially (horizontally as viewed in the drawing). The number of reciprocations during a single rotation of the cam plate 24 corresponds to the number of cylinders in the engine 1. The rotating and reciprocating movement of the cam plate 24 rotates and reciprocally moves the plunger 29 in an integral manner. Accordingly, the plunger 29 moves forward (toward the right as viewed in the drawing) in the barrel 28 as the lobes of the cam face 24a engage the cam rollers 25a, and the plunger 29 moves backward (toward the left as viewed in the drawing) in the barrel 28 as the lobes move off the cam rollers 25a.

In the barrel 28, a pressure chamber 30 is defined between the distal end of the plunger 29 and the opposed wall of the barrel 28. A plurality of intake grooves 31 and distribution ports 32 are defined in the distal and outer surface of the plunger 29. The number of the intake grooves 31 and the distribution ports 32 correspond to the number of cylinders in the engine 1. A plurality of distribution passages 33 and an intake port 34 are defined in the housing 21 at locations corresponding to the intake grooves 31 and distribution ports 32. A delivery valve 35 is provided at the outlet of each distribution passage 33. The delivery valve 35 is opened by the fuel pressure in the associated distribution passage 33.

When the feed pump 22 is driven by the rotation of the drive shaft 8a, the fuel from the fuel tank is drawn into the fuel chamber 27 through the fuel port 23. The backward movement of the plunger 29 during the rotation of the drive shaft 8a decreases the pressure in the pressure chamber 30. The fuel in the fuel chamber 27 is thus drawn into the pressure chamber 30 when each intake groove 31 is communicated with the intake port 34. The forward movement of the plunger 29 pressurizes the pressure chamber 30. This forces out the fuel in the pressure chamber 30 through each distribution passage 33. The associated delivery valve 35 is then opened to discharge the fuel out of the injection pump 8 and into the associated fuel line 7a.

A spill passage 36 is defined in the housing 21 to connect the pressure chamber 30 with the fuel chamber 27. An electromagnetic spill valve 37 is provided in the spill passage 36 . The spill valve 37 includes a coil 38 and a valve body 39. The spill valve 37 is normally opened. When the coil 38 is de-energized, the valve body 39 opens the spill passage 36 and releases the fuel in the pressure chamber 30 into the fuel chamber 27. When the coil 38 is energized, the valve body 39 closes the spill passage 36 and stops the flow of fuel from the pressure chamber 30 to the fuel chamber 27.

Accordingly, the flow of fuel released into the fuel chamber 27 from the pressure chamber 30 is adjusted by controlling the spill valve 37. When the spill valve 27 opens the spill passage 36 during the forward movement of the plunger 29, the pressure decreases in the pressure chamber 30. This stops the discharge of fuel from the injection pump 8 and ends the injection of fuel from the injection nozzle 7. The termination of fuel injection is controlled in this manner.

A timing device 17 (rotated 90 degrees in the drawing to facilitate description) is provided in the housing 21. The timing device 17 rotates the roller ring 25 about the drive shaft 8a. This alters the timing at which the lobes on the cam face 24a engage the cam rollers 24. Thus, the displacement of the roller ring 25 alters the timing at which the reciprocating of the plunger 29 is initiated. As a result, this adjusts the commencement timing of fuel injection from each nozzle 7.

The timing device 17 includes a housing 40 and a piston 41, which is accommodated in the housing 40. A pressure chamber 42 is defined in the housing 40 at one side of the piston 41 and a pressurizing chamber 43 is defined at the other side of the piston 41. Some of the fuel that is pressurized by the feed pump 22 is drawn into the pressure and pressurizing chambers 42, 43. The pressurized fuel acts on the piston 41. A spring 44 is arranged in the pressure chamber 42 to urge the piston 41 toward the pressurizing chamber 43. A slide pin 45 extends upward from the piston 41 and is coupled to the roller ring 25. The fuel pressure in the pressurising chamber 43 moves the piston 41 and inclines the slide pin 45. This rotates the roller ring 25 about the drive shaft 8a. The position of the piston 41 is determined by the balanced relationship between fuel pressure in the pressurizing chamber 43 and the urging force of the spring 44. This, in turn, determines the rotational position of the roller ring 25 to adjust the timing by which the cam plate 24 and the plunger 29 commence their forward movement. The timer device 17 further includes a timing control valve (TCV) 47, which is provided in a communication passage 46 extending between the pressure chamber 42 and the pressurizing chamber 43. The TCV 46 adjusts the flow rate of the fuel in the communicating passage 46 to adjust the fuel pressure in the pressurizing chamber 43. This controls the position of the piston 41 and thus controls the timing of initiating fuel injection from each nozzle 7.

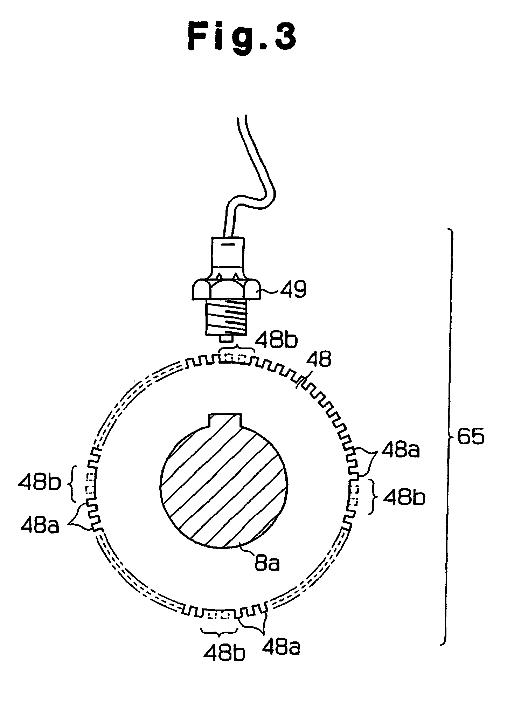

A pulsar 48, which serves as a rotating body, is secured on the drive shaft 8a so as to rotate integrally with the shaft 8a. A pickup coil 49 faces the circumferential surface of the pulser 48 and outputs a pulse signal PS in correspondence with the rotation of the pulser 48. The pulser 48 and the pickup coil 49 constitute a speed sensor 65, which serves as a speed detecting means for detecting the rotating speed of the crankshaft 10, or the engine speed NE. As shown in Fig. 3, the pulser 48 has a plurality of indicia, or projections 48a (56 projections in this embodiment), that project from its circumferential surface. An equal interval is provided between each pair of adjacent projections 48a. Among the projections 48a on the circumferential surface of the pulser 48, there are gaps 48b at which two projections 48a are missing. There are four such gaps 48b in this embodiment. The number of gape 48b is the same as the number of the cylinders in the engine 1. An equal interval is provided between each pair of adjacent gaps 48b.

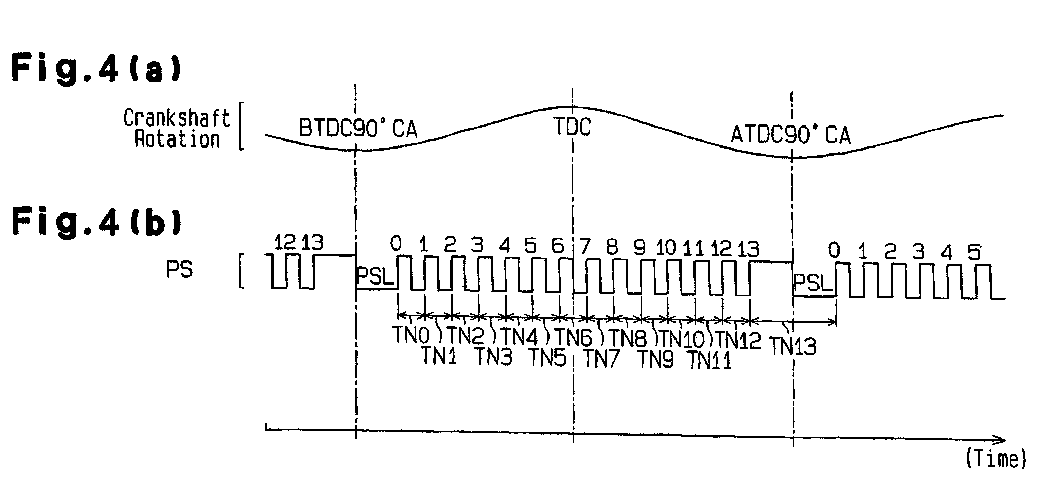

Figs. 4(a) and 4(b) constitute a timing chart that shows the rotation of the crankshaft 10 with respect to the pulse signals PS from the pickup coil 49. As shown in Fig. 4(a), the crankshaft 10 rotates and alters its phase in a cyclic manner. The phase alteration is caused by the cyclic reciprocation of the piston 9 in each cylinder during operation of the engine 1. The pickup coil 49 outputs a pulse signal PS as each projection 48a passes thereby. Thus, except for the times when the gaps 48b pass the pickup coil 49, a single pulse signal is output when the crankshaft 10 rotates a predetermined angle, or crank angle CA (in this embodiment, 11.25 degrees). The signal does not rise (the gap signal PSL) when a gap 48b passes by the pickup coil 49. The gap signals PSL correspond to the vicinity of a phase on the crankshaft 10 that is located 90 degrees before the phase corresponding to the top dead center (BTDC 90°) and to the vicinity of another phase located 90 degrees after the top dead center position TDC (ATDC 90°). A total of fourteen pulse signals PS (pulse signal no. 0 to pulse signal no. 13) are produced between the range of BTDC 90° and ATDC 90°. The engine speed NE is obtained based on the time length TN0-TN13 between two certain pulse signals PS.

The pickup coil 49 is pivotally supported integrally with the roller ring 25 to maintain a consistent relationship between the phase of the pulse signals PS output from the pickup coil 49 and the phase of the reciprocation of the plunger 29 regardless of the rotational position of the roller ring 25.

An automatic transmission 52 is connected to the crankshaft 10 to transmit the drive force of the engine 1 to drive wheels 53 of the automobile 51. The automatic transmission 52, which constitutes a transmitting means, is controlled electronically. The automatic transmission 52 is provided with a lock-up mechanism, gears that enable shifting between four forward speed ranges and one reverse speed range, and an actuator 54 having a plurality of solenoids to shift the transmission 52 between the speed ranges and the lock-up mechanism.

As shown in Fig. 1, a coolant temperature sensor 60 is provided in the engine 1 to detect the temperature of the coolant flowing through the engine 1, or the coolant temperature THW, and to output a corresponding signal. An air flow meter 61 is provided adjacent to the air cleaner 5 to detect the intake air amount Q of the air drawn into the intake passage 6 and to output a corresponding signal. An intake air temperature sensor 62 detects the temperature of the ambient air drawn into the intake passage 6, or the intake air temperature THA, and outputs a corresponding signal. A throttle sensor 63 is provided in the vicinity of the throttle valve 14 to detect the depression degree of the acceleration pedal 15, or the acceleration degree ACCP, from the opening amount of the valve 14 and to output a corresponding signal. The throttle sensor 63 incorporates a known conventional idle switch (not shown). The idle switch is activated to output an idle signal IDL when the throttle valve 14 is completely closed, that is, when the acceleration pedal 15 is not depressed. An intake air pressure sensor 64 is provided in the intake passage 6 to detect the intake air pressure PM and to output a corresponding signal. The speed sensor 65, which is provided on the injection pump 8, indirectly detects the rotating speed of the crankshaft 10, or the engine speed NE, based on the rotation of the drive shaft 8a and outputs the pulse signals PS in correspondence with the engine speed NE.

A vehicle velocity sensor 66 is provided in the automatic transmission 52 to detect the velocity of the automobile, or the vehicle velocity SPD, and to output a corresponding signal. A wheel speed sensor 67 is provided on the drive wheel 53 to detect the rotating speed of the drive wheel 53, or the wheel speed SPW, and to output a corresponding signal. Each of the sensors 60-67 constitute a detecting means.

An electronic control unit (ECU) 71 receives the signals sent from the sensors 60-67. The ECU 71 controls the spill valve 16 of the injection pump 8, the TCV 47, the actuator 54 of the automatic transmission 52 based on the received signals. The ECU 71 constitutes a first, second, and third computing means, a first and second correcting means, a control means, a prohibiting means, a retarding means, an altering means, and a renewing means.

The ECU 71 includes a central processing unit (CPU) 72, a read only memory (ROM) 73, a random access memory (RAM) 74, and a backup RAM 75. The ECU 71 constitutes a logic computing circuit by connecting the CPU 72, the ROM 73, the RAM 74, and the backup RAM 75 to an input circuit 76 and an output circuit 77 with a bus 78. The CPU 72 is provided with a computing control function and a counting function. A predetermined control program, among other programs, is stored in the ROM 73. Computation results of the CPU 72 are temporarily stored in the RAM 74. Data is stored beforehand in the backup RAM 75. The input circuit 76 includes a buffer, a waveform shaping circuit, and an analog to digital (A/D) converter. The output circuit 77 includes a drive circuit. The sensors 61, 62, 63, 64, 65 are connected to the input circuit 76. The electromagnetic spill valve 16, the TCV 47, and the actuator 54 are connected to the output circuit 77.

The CPU 72 reads the input value of the signals sent from the sensors 60-67 by way of the input circuit 76. Based on the input values, the CPU 72 controls the electromagnetic spill valve 16, the TCV 47, and the actuator 54 to perform fuel injection amount control, fuel injection timing control, fuel injection control during idling of the engine 1, or idle speed control (ISC), and gear shift control of the automatic transmission 52.

The fuel injection amount control refers to the control of the electromagnetic spill valve 16 for controlling the injection amount discharged from the injection pump 8 in accordance with the operating state of the engine 1. Through the injection amount control, the CPU 72 computes the final injection amount QFIN, which is used to control the electromagnetic spill valve 16, based on the parameters of the coolant temperature THW, the intake air amount Q, the intake air temperature THA, the acceleration degree ACCP, the intake air pressure PM, and the engine speed NE that are detected by the sensors 60, 61, 62, 63, 64, and 65, respectively. The ECU 71 thus serves as an injection amount control means.

The fuel injection timing control refers to the control of the TCV 47 (the timing device 17) for controlling the timing of initiating the discharge of fuel from the injection pump 8 in accordance with the operating state of the engine 1. Through the injection timing control, the CPU 72 computes an advance angle value that is used to control the TCV 47 based on the parameters of the acceleration degree ACCP and the engine speed NE that are detected by the sensors 63 and 65, respectively. The ECU 71 thus serves as an injection timing control means.

The idle speed control refers to the control of the amount of fuel discharged from the injection pump 8 for coinciding the engine speed NE during idling of the engine 1 with a reference value. Through the idle speed control, the CPU 72 computes an ISC correction value that is used to correct the amount of fuel injection so that the engine speed NE coincides with a reference value. The ECU 71 thus serves as an idle speed control means.

The gear shift control refers to the control of the actuator for controlling the speed range (gear ratio) of the automatic transmission 52 in accordance with the operating state of the engine 1. Through the idle speed control, the CPU 72 computes the range value SHP, which indicates the speed range (gear ratio) and which is used to control the actuator 54 based on the parameters of the engine speed NE and the vehicle velocity SPD that are detected by the sensors 65 and 66, respectively. The range value SHP is set at one corresponding with the first speed range, two corresponding with the second speed range, three corresponding with the third speed range, or four corresponding with the fourth speed range. The ECU 71 thus serves as a gear shift control means.

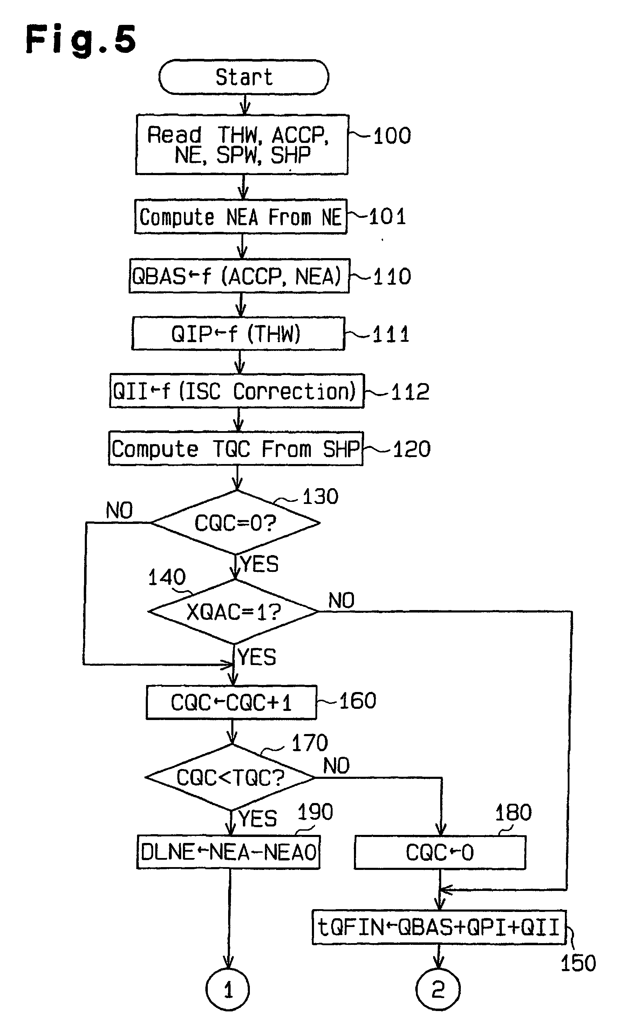

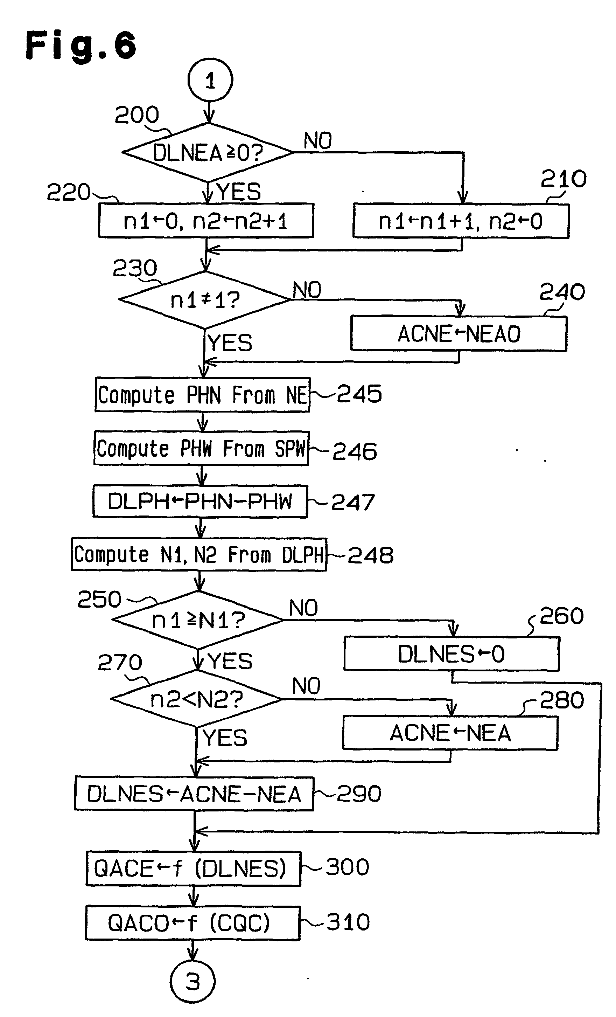

Among the various controls executed by the ECU 71, the fuel injection amount control routine will now be described. A program used during fuel injection amount control is stored in the ROM 43. Figs. 5 to 7 show a flowchart of the injection amount control routine. The ECU 71 executes this routine periodically.

At step 100, the ECU 71 reads the values of the coolant temperature THW, the acceleration degree ACCP, the engine speed NE, and the wheel speed SPW that are detected by the coolant temperature sensor 60, the throttle sensor 63, the speed sensor 65, and the wheel speed sensor 67, respectively. The ECU 71 also reads the range value SHP, which is computed through the gear shift control.

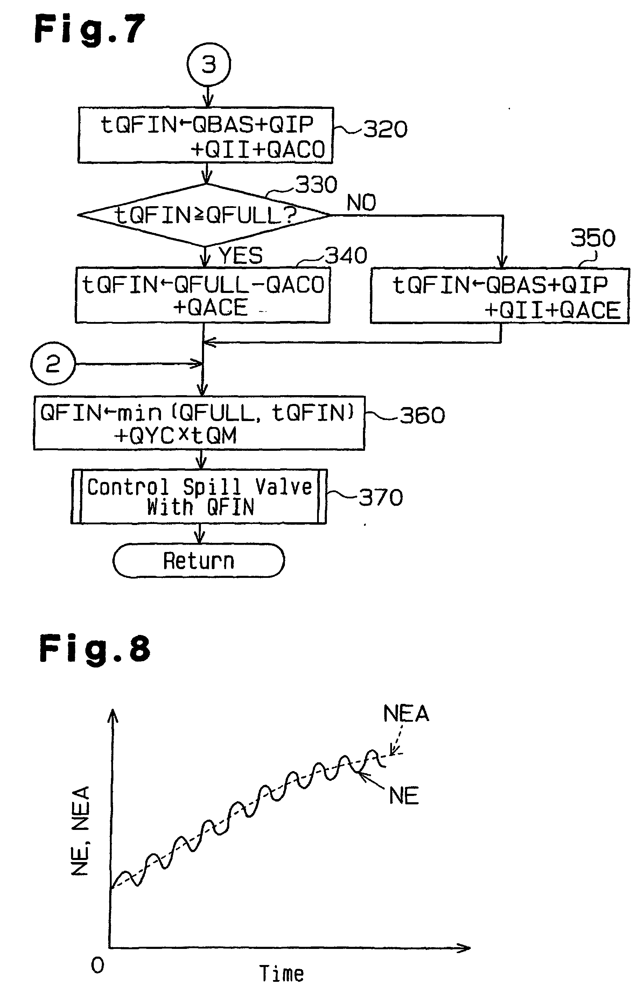

At step 101, the ECU 71 reads a plurality of engine speed NE values that have been read previously. The ECU 71 then computes the average value of these values and obtains the average engine speed NEA. As shown in the solid line of Fig. 8, the reciprocation of the pistons 9 in the associated cylinders causes the engine speed NE to constantly fluctuate in a cyclic manner with a relatively high frequency. Thus, in step 101, the average engine speed NE, which is shown by the dotted line in Fig. 8, is obtained to eliminate the cyclic fluctuation and confirm the tendency in the behavior of the engine speed NE.

At step 110, the ECU 71 computes the value of the basic injection amount QBAS based on the values of the acceleration degree ACCP and the average engine speed NEA. To obtain the basic injection amount QBAS, the ECU 71 refers to functional data, the parameters of which include the basic injection amount QBAS, the acceleration degree ACCP, and the average engine speed NEA.

At step 111, the ECU 71 computes an assumed correction amount QIP used to correct the basic injection amount QBAS. The ECU 71 computes the value of the assumed correction amount QIP based on the coolant temperature THW. To obtain the value of the assumed correction amount QIP, the ECU 71 refers to functional data, the parameters of which include the assumed correction amount QIP and the coolant temperature THW.

At step 112, the ECU 71 computes the integral correction amount QII used to correct the basic injection amount QBAS. The ECU 71 computes the value of the integral correction amount QII based on the value of an ISC correction amount, which is computed by the idle speed control. To obtain the value of the correction amount QII, the ECU 71 refers to functional data, the parameters of which include the correction amount QII and the ISC correction amount.

At step 120, the ECU 71 computes the value of the acceleration control time TQC that corresponds with the range value SHP. The acceleration control time TQC indicates the time required for acceleration control, which is executed to control the amount of fuel injection during acceleration. The value of the control time TQC becomes higher as the range value SHP indicating the current speed range (gear ratio) becomes lower. On the other hand, the value of the control time TQC becomes lower as the range value SHP becomes higher.

At step 130, the ECU 71 determines whether the value of the accelerating time CQC is zero. The time CQC indicates the elapsed time from when the engine 1 commences acceleration. If the value of the accelerating time CQC is set at zero, this indicates that the engine 1 is not accelerating. In this case, the ECU 71 proceeds to step 140. If the value of the accelerating time CQC is not set at zero, this indicate that the engine 1 is accelerating. In this ease, the ECU 71 proceeds to step 160.

At step 140, the ECU 71 determines whether the acceleration flag XQAC is set at one. The acceleration flag indicates whether it has been determined that the engine 1 has shifted to an accelerating state. If it is determined that the engine 1 has shifted to an accelerating state, the flag XQAC is set at one, and if not, the flag XQAC is set at zero.

A judgement routine is executed to determine whether the engine 1 is accelerating. In the judgement routine, the ECU 71 computes the deviation between the values of the present basic injection amount QBAS and the basic injection amount QBAS obtained in the previous cycle of this *routine.* The deviation value indicates changes in the amount of fuel injection demanded by the engine 1. The ECU 71 judges whether or not the deviation value is greater than a predetermined reference value KQAC. The ECU 71 also judges whether the value of the present basic injection value QBAS is greater than a reference value QRL, which indicates the amount of fuel injection demanded by the engine 1 when there is no load applied to the engine 1. The ECU 71 further judges whether or not the value of the accelerating time CQC is zero, that is, whether or not the acceleration control is being executed. If positive results are obtained in every one of the judgement steps, that is, if it is judged that the deviation value is greater than the predetermined reference value KQAC, the value of the present basic injection value QBAS is greater than the reference value QRL, and the value of the accelerating time CQC is zero, the ECU 71 determines that the engine 1 is accelerating. In this case, the ECU 71 sets the value of the acceleration flag XQAC at one. If negative results are obtained in every one of the judgement steps, the ECU 71 sets the value of the acceleration flag XQAC at zero. Thus, the ECU 71 carrying out step 140 serves as a determining means for determining whether or not the engine 1 is accelerating.

If it confirmed that the acceleration flag XQAC is set at zero in step 140, this indicates that the engine 1 is in a normal operating state and not accelerating. In this case, the ECU 51 proceeds to step 150 to execute normal operation control. At step 150, the ECU 71 computes the tentative final injection amount tQFIN by adding the values of the assumed correction amount QIP and the integral correction amount QII to the basic injection amount QBAS. The ECU 71 then proceeds to step 360.

If it confirmed that the acceleration flag XQAC is set at one in step 140, this indicates that the engine 1 is accelerating. In this case, the ECU 71 proceeds to step 160 to execute acceleration control. At step 160, the ECU 71 adds one to the accelerating time CQC in an incremental manner.

At step 170, the ECU 71 determines whether or not the value of the accelerating time CQC is smaller than the acceleration control time TQC. If the value of the accelerating time CQC is equal to or greater than the control time TQC, this indicates that the control time TQC has elapsed since the commencement of acceleration control. In this case, the ECU 71 proceeds to step 180 and resets the accelerating time CQC at zero. The ECU 71 then proceeds to step 150.

If the value of the accelerating time CQC is smaller than the control time TQC in step 170, this indicates that the control time TQC has not yet elapsed since the commencement of acceleration control. In this case, the ECU 71 proceeds to step 190. At step 190, the ECU 71 computes the altering value DLNE by subtracting the value of the previous average engine speed NEAO from the present average engine speed NEA.

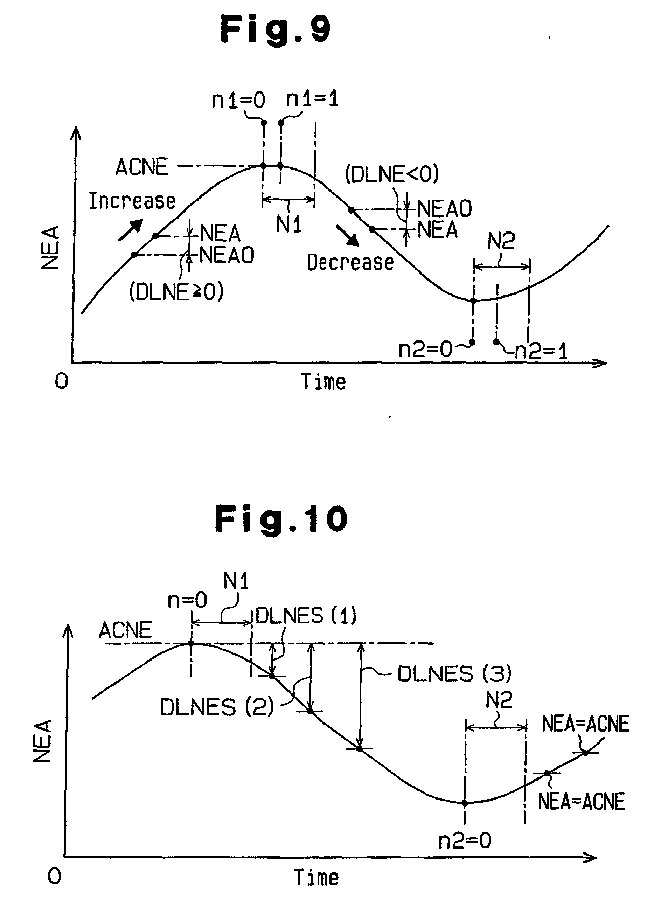

At step 200, the ECU 71 determines whether or not the altering value DLNE is equal to or greater than zero. In other words, the ECU 71 determines whether the average engine speed NEA is increasing. As shown in Fig. 9, if the altering value DLNE is smaller than zero, this indicates that the average engine speed NBA is decreasing. In this case, the ECU 71 proceeds to step 210 and adds one to a deceleration time n1 in an incremental manner. The ECU 71 also resets the value of an acceleration time n2 at zero. The deceleration time n1 indicates the time that has elapsed since the average engine speed NEA started to decrease. The acceleration time n2 indicates the time that has elapsed since the average engine speed NEA started to increase.

The ECU 71 proceeds to step 230 from either step 210 or step 220 and determines if the deceleration time n1 indicates a value other than one. If the value of the deceleration time n1 is set at one, this indicates that the average engine speed NEA has just started to decrease. In this case, the ECU 71 proceeds to step 240. At step 240, the ECU 71 sets the value of the prior average engine speed NEAO as the maximum engine speed ACNE and then proceeds to step 245. In other words, as shown in Fig. 9, the value of the average engine speed NEA when the value of the deceleration time n1 indicates zero is set as the maximum engine speed ACNE. If the deceleration time n1 is set at a value other than one, this indicates that a certain length of time has elapsed since the average engine speed NEA started to decrease. In this case, the ECU 71 proceeds to step 245.

At step 245, the ECU 71 computes the value of the crankshaft rotational phase PHN based on the engine speed NE obtained from the pulse signals PS. At step 246, the ECU 71 computes the value of the wheel rotational phase PHW based on the signals corresponding to the wheel speed SPW. At step 247, the ECU 71 computes the rotational phase difference DLPH from the difference between the crankshaft rotational phase PHN and the wheel rotational phase PHW. The phase difference DLPH is a correlational value related to the fluctuation cycle of the average engine speed NEA. At step 248, the ECU 71 computes two reference values N1, N2 (to be described later) based on the rotational phase difference DLPH. The reference values N1, N2 are values that delay the initiating timing of the correction of the basic injection amount QBAS with the speed correction amount QACE (to be described later).

At step 250, the ECU 71 determines whether the value of the deceleration time n1 is equal to or greater than the predetermined reference value N1 (N1≧1). As shown in Fig. 9, the reference value N1 is a value that corresponds to a certain period of time starting from when the engine speed NE starts to decrease from the maximum engine speed ACNE. If the value of the deceleration time n1 is smaller than the reference value N1, the ECU 71 proceeds to step 260. At step 260, the ECU 71 resets the engine speed deviation DLNES (will be described later) to zero and proceeds to step 300.

If the value of the deceleration time n1 is equal to or greater than the predetermined value N1, the ECU 71 proceeds to step 270. At step 270, the ECU 71 determines whether the value of the acceleration time n2 is smaller than a predetermined reference value N2 (N2≧1). As shown in Fig. 9, the reference value N2 is a value that corresponds to a certain period of time starting from when the engine speed NE starts to increase. If the value of the acceleration time n2 is equal to or greater than the reference value N2 in step 270, the ECU 71 proceeds to step 280. At step 280, the ECU 71 sets the value of the present average engine speed NEA as the value of the maximum engine speed ACNE and proceeds to step 290. If the acceleration time n2 is smaller than the reference value N2 in step 270, the ECU 71 proceeds to step 290. In other words, if the average engine speed NEA keeps increasing over a time period that exceeds the reference value N2, the value of the present average engine speed NEA is set as the value of the maximum engine speed ACNE, as shown in Fig. 10.

At step 290, the ECU 71 computes the engine speed deviation DLNES from the deviation between the value of the maximum engine speed ACNE and the value of the present average engine speed NEA. In other words, after the deceleration time n1 exceeds the reference value N1, the engine speed DLNES is obtained continuously from the maximum engine speed ACNE.

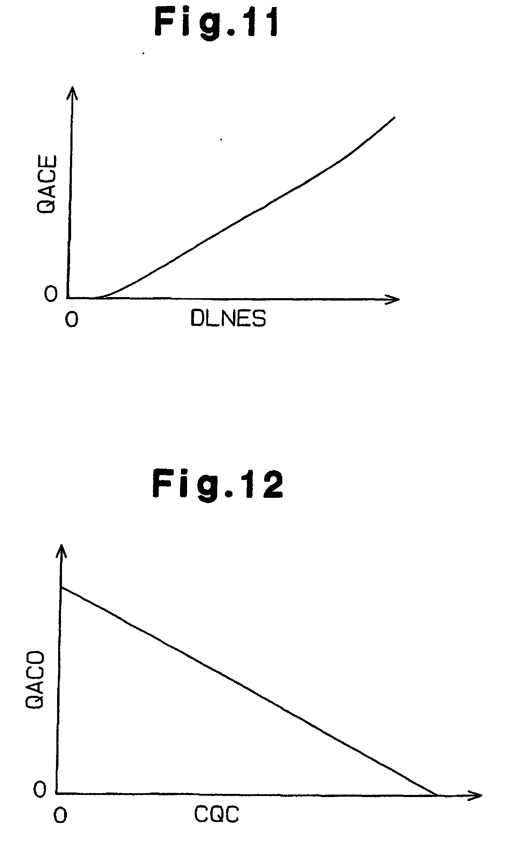

The ECU 71 proceeds to step 300 from either step 260 or step 290. At step 300, the ECU 71 computes the value of the speed correction amount QACE used to correct the basic injection amount QBAS in accordance with the present engine speed deviation DLNES. The speed correction amount QACE is a function of the engine speed deviation DLNES, as shown in the graph of Fig. 11. The speed correction amount QACE increases the amount of fuel injected from the injection nozzle 7 in accordance with the engine speed deviation DLNES. The speed correction amount QACE increases as the engine speed deviation DLNES increases.

At step 310, the ECU 71 computes value of the exhaust gas correction amount QACO based on the value of the accelerating time CQC. The exhaust gas correction amount QACO corrects the basic injection amount QBAS, which has been corrected by the speed correction amount QACO, so that the exhaust gas is within an allowable range and does not produce smoke. The ECU 71 obtains the value of the exhaust gas correction amount QACO by referring to function data, the parameters of which are the exhaust gas correction amount QACO and the accelerating time CQC, as shown in the graph of Fig. 12. As apparent from the graph, the exhaust gas correction amount QACO decreases gradually as the accelerating time CQC increases. In other words, the exhaust gas correction amount QACO decreases gradually as time elapses after the engine 1 starts acceleration and the speed correction amount QACE starts to correct the basic injection amount QBAS. Furthermore, the maximum value of the exhaust gas correction amount QACO does not exceed the value of the speed correction amount QACE.

At step 320, the ECU 71 adds the values of the basic injection amount QBAS, the assumed correction amount QIP, the integral correction amount QII, and the exhaust gas correction amount QACO to obtain the value of the tentative final injection amount tQFIN.

At step 330, the ECU 71 determines whether or not the value of the tentative final injection amount tQFIN is equal to or greater than maximum injection amount QFULL. The maximum injection amount QFULL indicates the predetermined injection amount when the acceleration degree ACCP is maximum, that is, when the load of the engine 1 is in a maximum state. The injection amount QFULL is the upper limit for suppressing the generation of smoke from the exhaust gas. If the value of the tentative final injection amount tQFIN is equal to or greater than the value of the maximum injection amount QFULL in step 330, this indicates that the final injection amount tQFIN exceeds the limit for suppressing the generation of smoke. In this case, the ECU 71 proceeds to step 340. At step 340, the ECU 71 recomputes the tentative final injection amount tQFIN by first subtracting the exhaust gas correction amount QACO from the maximum injection amount QFULL. The ECU 71 then adds the speed correction amount QACE to suppress further decrease of the engine speed NE.

If it is determined that the value of the tentative final injection amount tQFIN is smaller than the maximum injection amount QFULL in step 330, this indicates that smoke will not be generated. In this case, the ECU 71 proceeds to step 350. At step 350, the ECU 71 recomputes the value of the tentative final injection amount tQFIN by adding the basic injection amount QBAS, the assumed correction amount QIP, the integral correction amount QII, and the speed correction amount QACE, which suppresses a fall in the engine speed NE.

The ECU 71 proceeds to step 360 from steps 160, 340, or 350. At step 360, the ECU 71 computes the final injection amount QFIN based on the values of the maximum injection amount QFULL and the tentative final injection amount tQFIN, which was computed in step 340 or 350. In other words, the ECU 71 obtains the final injection amount QFIN by first selecting the smaller value among the maximum injection amount QFULL and the tentative final injection amount tQFIN. To this value, the ECU 71 then adds the value obtained by multiplying the correction amount QYC by the correction coefficient tQM. The value obtained when multiplying the correction amount QYC by the correction coefficient tQM corresponds to the correction amount for suppressing fluctuation of the engine speed NE that differs between cylinders.

At step 370, the ECU 71 controls the electromagnetic spill valve 16 in accordance with the final injection amount QFIN at the predetermined timing. This injects fuel from the injection pump 8 and the injection nozzles 7. The ECU 71 then temporarily terminates subsequent processing and restarts from step 100 when executing the next cycle.

As described above, the rotation of the crankshaft 10 of the engine 1 synchronously rotates the drive shaft 8a of the injection pump 8. The roller ring 25 and the cam plate 24 cooperate during the rotation of the drive shaft 8a to operate the plunger 29 and discharge fuel from the injection pump 8. This injects fuel into the combustion chambers 2 through the associated injection nozzle 7. The fuel is burned the combustion chamber 1. This drives the associated piston 9 and rotates the crankshaft 10. Thus, the combustion of fuel sent into each combustion chamber 2 affects the operating state of the engine 1 such as the engine speed NE (average engine speed NEA). The parameters of THW, ACCP, NEA, which are respectively detected by sensors 60, 63, 65 and which reflect the operating state of the engine 1, are used by the ECU 71 to compute the basic injection amount QBAS. The ECU 71 adjusts the amount of fuel injected from each injection nozzle 7 by controlling the injection pump 8 in accordance with the final injection amount QFIN, which is based on the basic injection amount QBAS among other parameters.

During computation of the final injection amount QFIN, the value of the average engine speed NEA at the point of decrease is set as the value of the maximum engine speed ACNE. Thus, the value of the maximum engine speed ACNE reflects the average engine speed NEA. Afterward and until the average engine speed NEA starts to increase, the ECU 71 computes the deviation between the maximum engine speed ACNE and the present average engine speed NEA to obtain the engine speed deviation DLNES. The deviation DLNES also reflects the average engine speed NEA. The ECU 71 computes the speed correction amount QACE in accordance with the value of the deviation DLNES. The ECU 71 further adds the value of the correction amount QACE to the basic injection amount QBAS to correct the injection amount QBAS and obtain the final injection amount.

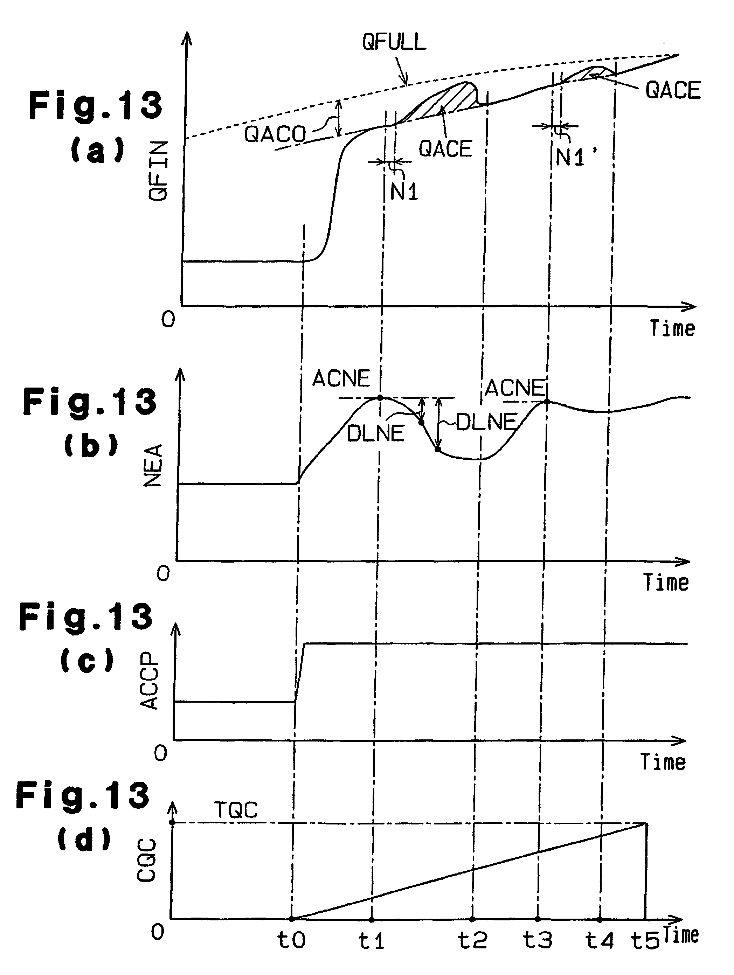

Referring to Figs. 13(a) to 13(d), the acceleration degree ACCP increases abruptly at time t0. This accelerates the engine 1 and increases the average engine speed NEA in a sudden manner. Thus, the accelerating time CQC is measured in an incremental manner starting from time t0. At time t1, the alteration of the average engine speed NEA reaches a maximum point. The value of this maximum average engine speed NEA is set as the maximum rotating speed ACNE. The average engine speed NEA then starts to decrease. From this point and until the average engine speed NEA starts to increase again at time t2, the final injection amount QFIN is obtained by correcting the basic injection amount QBAS with the speed correction amount QACE, which reflects the average engine speed NEA. In the same manner, if the average engine speed NEA increases subsequently between time t2 and time t3, the final injection amount QFIN is computed by correcting the basic injection amount QBAS with the speed correction amount QACE.

Thus, the amount of fuel injected into each combustion chamber 2 through the associated nozzle 7 is adjusted in accordance with fluctuations of the average engine speed NEA to suppress a fall in the average engine speed NEA from the maximum engine speed ACNE. Accordingly, during acceleration of the engine 1, the average engine speed NEA is readily stabilized when the engine speed NEA fluctuates.

The basic injection amount QBAS is corrected by the speed correction amount QACE to readily counter fluctuations of the average engine speed NEA. Thus, fine correction of the basic injection amount QBAS is not necessary to deal with resonance frequency vibrations, which are unique to the vehicle and which may affect fluctuations of the average engine speed NEA. Therefore, the fuel injection apparatus according to the present invention is easily applied to different types or sizes of vehicles and engines.

As shown in Fig. 11, the speed correction amount QACE increases as the engine speed deviation DLNES increases. This increases the final injection amount QFIN. Therefore, the amount of fuel injected into each injection nozzle 7 through the associated injection nozzle 7 is optimally adjusted in accordance with the level of the decrease of the average engine speed NEA from the maximum engine speed ACNE. This suppresses reduction of the average engine speed NEA. Thus, the average engine speed NEA is readily stabilized when it starts to fluctuate.

Smoke in the exhaust gas emitted from the engine 1 is maintained within an allowable range. This is achieved by subtracting the exhaust gas correction amount QACO from the sum of the basic injection amount QBAS and the speed correction amount QACE. Thus, the final injection amount QFIN does not cause undesirable smoke in the exhaust gas. Accordingly, the average engine speed NEA is readily stabilized without producing undesirable engine emissions when the average engine speed NEA fluctuates.

Since the final injection amount QFIN is obtained by taking into consideration the exhaust gas correction amount QACO, the final injection amount QFIN can suddenly be increased to a maximum value, which is the limit for suppressing the production of smoke. Therefore, this improves the response of the engine 1 during sudden acceleration.

When the load applied to the engine 1 is maximum, which causes the tentative final injection amount tQFULL, which is computed before determining the final injection amount QFIN, to exceed the maximum injection amount QFULL, the value of the final injection amount QFIN is decreased. In other words, the final injection amount QFIN may be decreased by a value corresponding to the exhaust gas correction amount QACO, at least while the basic injection amount QBAS is corrected by the speed correction amount QACE. This attenuates fluctuations of the average engine speed NEA even when the engine 1 is operating at low speed with maximum load applied to the engine 1.

To suppress the production of smoke from the engine 1, the value of the exhaust gas correction amount QACO, which is subtracted from the basic injection amount QBAS, is gradually decreased as the speed correction amount QACE is added to the basic injection amount QBAS. Thus, when the average engine speed NEA fluctuates, priority is first given to the suppression of smoke when correcting the basic injection amount QBAS. As the fluctuation continues, priority is gradually shifted to the suppression of a decrease in the average engine speed NEA. Thus, the average engine speed NEA is readily stabilized without degrading engine emissions when the engine speed NEA fluctuates. Furthermore, since priority is gradually shifted away from the suppression of engine emissions, the driving performance of the engine 1 is improved.

The value of the exhaust gas correction amount QACO, which is subtracted from the basic injection amount QBAS to suppress the production of smoke, never exceeds the speed correction amount QACE, which is added to the basic injection amount QBAS to suppress fluctuation of the engine speed. Thus, the correction effect for suppressing reduction of the average engine speed NEA is not offset by the correction effect for suppressing the production of smoke. Accordingly, the average engine speed NEA is readily stabilized without degrading engine emissions when the engine speed NEA fluctuates.

When the value of the basic injection amount QBAS corrected by the speed correction amount QACE is within a range that does not produce smoke, the correction of the basic injection amount QBAS with the exhaust gas correction amount is prohibited. Thus, the correction of the basic injection amount QBAS with the exhaust gas amount QACO is prohibited when such correction is not necessary. This minimizes the influence of the procedures carried out to prevent deterioration of the exhaust gas when suppressing a decrease of the average engine speed NEA.

The difference between the crankshaft rotational phase PHN and the wheel rotational phase PHW is computed to obtain the rotational phase difference DLPH, which is a correlational value related to the fluctuation cycle of the average engine speed NEA. The timing for initiating the correction of the basic injection amount QBAS with the speed correction amount QACE is delayed for a period corresponding to the time (reference value N1) computed from the rotational phase difference DLPH. Thus, when the average engine speed NEA fluctuates in a cyclic manner, the correction for suppressing a decrease of the average engine speed NEA is delayed in accordance with the cyclic fluctuation of the average engine speed NEA. Accordingly, the cyclic fluctuation of the average engine speed NEA is suppressed in accordance with the fluctuation cycle. As a result, the average engine speed NEA is readily stabilized when the engine speed NEA fluctuates in a cyclic manner.

The period for correcting the basic injection amount QBAS With the speed correction amount QACE is altered in accordance with the speed range of the automatic transmission 52. That is, as shown in Fig. 13(d), the correction of the basic injection amount QBAS with the speed correction amount QACE is performed from time t0 to time t5, which is the point of time at which the accelerating time CQC reaches the predetermined control time TQC. The length of the control time TQC is determined by the speed range of the automatic transmission 52, or the range value SHP. Therefore, reduction of the average engine speed NEA is suppressed in an optimal manner in accordance with the degree of fluctuation of the average engine speed NEA within the speed range of the selected gear of the automatic transmission 52. Accordingly, when the average engine speed NEA fluctuates, the engine speed NEA is readily stabilized in accordance with the degree of fluctuation of the engine speed NEA and within an optimal time period.

As shown in Fig. 10, when the average engine speed NEA starts to increase, the maximum engine speed ACNE is renewed continuously by the value of the present average engine speed NEA. Thus, the values of the engine speed deviation DLNES and the speed correction amount QACE remain at zero until the average engine speed NEA starts to decrease. In such state, the correction for suppressing reduction of the average engine speed NEA is not performed. Accordingly, the basic injection amount QBAS is not corrected by the speed correction amount QACE when the average engine speed increases, as shown in Figs. 13(a) and 13(b) between time t2 and time t3. As a result, the fluctuation of the average engine speed NEA is not increased when corrected by the speed correction amount QACE. Hence, the average engine speed NEA is readily stabilized when the engine speed NEA fluctuates.

It should be apparent to those skilled in the art that the present invention may be embodied in many other specific forms without departing from the spirit or scope of the invention. More particularly, the present invention may be modified as described below.

In the illustrated embodiment, the fuel injection apparatus according to the present invention is employed in a diesel engine, the injecting mechanism of which includes the injection nozzles 7 and the injection pump 8. However, the fuel injection apparatus according to the present invention may be employed in a gasoline engine, the injecting mechanism of which includes an injector.

The automatic transmission 52 is employed as the transmission mechanism in the illustrated embodiment. However, a manual transmission may be employed instead of the automatic transmission 52.

The rotating speed of the crankshaft 10 is detected indirectly by the speed sensor 65 in the illustrated embodiment. However, a speed sensor that directly detects the rotating speed of the crankshaft 10 may be employed instead.

The injection pump 8 provided with the electromagnetic spill valve 16 is used as an actuator that controls the amount of injected fuel in the illustrated embodiment. However, a spill ring provided on the plunger and an electromagnetic solenoid for moving the ring may be employed instead as the actuator.

Therefore, the present examples and embodiments are to be considered as illustrative and not restrictive and the invention is not to be limited to the details given herein, but may be modified within the scope of the appended claims.

A diesel engine (1) is provided with an injection nozzle (7) for injecting fuel into a combustion chamber (2) and an injection pump (8) for forcing fuel toward the nozzle. An electronic control unit (ECU) (71) computes a basic injection amount from parameters such as an average engine speed. During acceleration of the engine (1), the ECU (71) computes the maximum engine speed from the average engine speed when the average engine speed starts to decrease. The ECU (71) increases the basic injection amount in accordance with the difference between the maximum engine speed and the average engine speed until the average engine speed starts to increase again. The ECU (71) controls the injection pump (8) based on the corrected basic injection amount to adjust the amount of fuel injected from the injection nozzle (7).

## Claims

1. A fuel injection apparatus for controlling the amount of fuel that is injected into an engine (1) from an injecting means (7, 8), wherein the apparatus includes a detecting means (65) for detecting the engine speed, first computing means (71) for computing the basic injection amount in accordance with the detected engine speed, and a control means (71) for controlling the injecting means in accordance with the computed basic injection amount, the apparatus being **characterized by**:
a second computing means (71) for computing a maximum engine speed based on the engine speed detected when the engine speed starts to decrease; and
a first correcting means (71) for correcting the computed basic injection amount based on a difference between the maximum engine speed and the detected engine speed during a period when the detected engine speed begins to decrease from the maximum engine speed until when the engine speed begins to increase.

2. The apparatus according to claim 1 **characterized in that** the correction by the first correcting means is executed by increasing the amount of fuel injected from the injecting means in accordance with the difference between the maximum engine speed and the detected engine speed, the degree of increase being set to become larger as the difference becomes larger.

3. The apparatus according to claim 2 **characterized by** a second correcting moans (71) for further correcting the basic injection amount by subtracting a predetermined amount from the basic injection amount corrected by the first correcting means (71) to include the basic injection amount within a range that prevents undesirable emissions from the engine (1).

4. The apparatus according to claim 3 **characterized in that** the predetermined amount subtracted by the second correcting means (71) is set to decrease gradually in accordance with the time elapsed from the initiation of correction by the first correction means.

5. The apparatus according to claim 3 **characterized in that** the predetermined amount subtracted by the second correcting means (71) is set not to exceed the amount of fuel added by the first correcting means (71).

6. The apparatus according to claim 3 **characterized by** a prohibiting means (71) prohibiting correction by the second correcting means (71) when determined that the basic injection amount corrected by the first correcting means (71) is within a range that prevents undesirable emissions from the engine (1).

7. The apparatus according to any one of the preceding claims **characterized by** a third computing means (71) for computing a fluctuation cycle of the engine speed and a correlational value of the fluctuation cycle and a delaying means (71) for delaying the initiation of correction by the first correcting means (71) by a predetermined time corresponding to the fluctuation cycle or the correlational value of the fluctuation cycle, which is computed after the second computing means (71) computes the maximum engine speed.

8. The apparatus according to any one of the preceding claims **characterized by** a transmitting means (52) for transmitting the power produced by the engine (1) to a drive wheel (53), the transmitting means shifting the engine speed between a plurality of ranges, and an altering means for altering the time period for correction of the basic injection amount with the first correcting means (71) in accordance with the range of the transmitting means.

9. The apparatus according to any one of the preceding claims **characterized by** a renewing means for renewing the computed maximum engine speed with the engine speed detected when the engine speed starts to increase.

## Patentansprüche

1. Kraftstoffeinspritzvorrichtung zum Steuern der Menge von Kraftstoff, der von einer Einspritzeinrichtung (7, 8) in eine Kraftmaschine (1) hinein eingespritzt wird, wobei die Vorrichtung eine Ermittlungseinrichtung (65) zum Ermitteln der Kraftmaschinendrehzahl, erste Berechnungseinrichtungen (71) zum Berechnen der Grundeinspritzmenge in Übereinstimmung mit der ermittelten Kraftmaschinendrehzahl und eine Steuereinrichtung (71) zum Steuern der Einspritzeinrichtung in Übereinstimmung mit der berechneten Grundeinspritzmenge hat, wobei die Vorrichtung
**gekennzeichnet ist durch:**
eine zweite Berechnungseinrichtung (71) zum Berechnen einer maximalen Kraftmaschinendrehzahl auf Grundlage der Kraftmaschinendrehzahl, die ermittelt wird, wenn die Kraftmaschinendrehzahl anfängt abzufallen; und
eine erste Korrektureinrichtung (71) zum Korrigieren der berechneten Grundeinspritzmenge auf Grundlage einer Differenz zwischen der maximalen Kraftmaschinendrehzahl und der ermittelten Kraftmaschinendrehzahl während einer Zeitspanne, von einem Zeitpunkt an, zu dem die ermittelte Kraftmaschinendrehzahl anfängt von der maximalen Kraftmaschinendrehzahl abzufallen, bis zu dem Zeitpunkt, zu dem die Kraftmaschinendrehzahl anfängt anzusteigen.

2. Vorrichtung gemäß Anspruch 1,
**dadurch gekennzeichnet, dass**
die Korrektur durch die erste Korrektureinrichtung durch Erhöhung der Menge von von der Einspritzeinrichtung in Übereinstimmung mit der Differenz zwischen der maximalen Kraftmaschinendrehzahl und der ermittelten Kraftmaschinendrehzahl eingespritztem Kraftstoff ausgeführt wird, wobei der Erhöhungsgrad so eingestellt ist, dass er größer wird, wenn die Differenz größer wird.

3. Vorrichtung gemäß Anspruch 2, **gekennzeichnet durch** eine zweite Korrektureinrichtung (71) zum weiteren Korrigieren der Grundeinspritzmenge **durch** Abziehen einer vorbestimmten Menge von der **durch** die erste Korrektureinrichtung (71) korrigierten Grundeinspritzmenge, damit die Grundeinspritzmenge innerhalb eines Bereichs beinhaltet ist, in dem ungewünschte Emissionen von der Kraftmaschine (1)verhindert werden.

4. Vorrichtung gemäß Anspruch 3,
**dadurch gekennzeichnet, dass**
die durch die zweite Korrektureinrichtung (71) abgezogene vorbestimmte Menge so eingestellt ist, dass sie in Übereinstimmung mit der von dem Anfang der Korrektur durch die erste Korrektureinrichtung verstrichene Zeit schrittweise abnimmt.

5. Vorrichtung gemäß Anspruch 3,
**dadurch gekennzeichnet, dass**
die durch die zweite Korrektureinrichtung (71) abgezogene vorbestimmte Menge so eingestellt ist, dass sie die Menge von durch die erste Korrektureinrichtung (71) addierten Kraftstoff nicht übersteigt.

6. Vorrichtung gemäß Anspruch 3, **gekennzeichnet durch** eine Verhinderungseinrichtung (71), die eine Korrektur **durch** die zweite Korrektureinrichtung (71) verhindert, wenn bestimmt wird, dass sich die **durch** die erste Korrektureinrichtung (71) korrigierte Grundeinspritzmenge innerhalb eines Bereichs befindet, der ungewünschte Emissionen von der Kraftmaschine (1) verhindert.

7. Vorrichtung gemäß einem der vorstehenden Ansprüche, **gekennzeichnet durch** eine dritte Berechnungseinrichtung (71) zum Berechnen eines Schwankungszyklus der Kraftmaschinendrehzahl und eines Korrelationswerts des Schwankungszyklus und **gekennzeichnet durch** eine Verzögerungseinrichtung (71) zum Verzögern des Korrekturanfangs **durch** die erste Korrektureinrichtung (71) um eine vorbestimmte Zeit entsprechend dem Schwankungszyklus oder dem Korrelationswert des Schwankungszyklus, der berechnet wird, nachdem die zweite Berechnungseinrichtung (71) die maximale Kraftmaschinendrehzahl berechnet.

8. Vorrichtung gemäß einem der vorstehenden Ansprüche, **gekennzeichnet durch** eine Übertragungseinrichtung (52) zum Übertragen der **durch** die Kraftmaschine (1) erzeugten Energie auf ein Antriebsrad (53), wobei die Übertragungseinrichtung die Kraftmaschinendrehzahl zwischen einer Vielzahl von Bereichen verstellt und **gekennzeichnet durch** eine Änderungseinrichtung zum Ändern der Zeitspanne zur Korrektur der Grundeinspritzmenge mit der ersten Korrektureinrichtung (71) in Übereinstimmung mit dem Bereich der Übertragungseinrichtung.

9. Vorrichtung gemäß einem der vorstehenden Ansprüche, **gekennzeichnet durch** eine Auffrischungseinrichtung zum Auffrischen der berechneten, maximalen Kraftmaschinendrehzahl **durch** die Kraftmaschinendrehzahl die ermittelt wird, wenn die Kraftmaschinendrehzahl anfängt anzusteigen.

## Revendications

1. Appareil d'injection de carburant destiné à commander la quantité de carburant qui est injectée dans un moteur (1) à partir d'un moyen d'injection (7, 8), dans lequel l'appareil comprend un moyen de détection (65) destiné à détecter la vitesse du moteur, un premier moyen de calcul (71) destiné à calculer la quantité d'injection de base conformément à la vitesse du moteur détectée et un moyen de commande (71) destiné à commander le moyen d'injection conformément à la quantité d'injection de base calculée, l'appareil étant **caractérisé par** :
un deuxième moyen de calcul (71) destiné à calculer une vitesse de moteur maximale sur la base de la vitesse de moteur détectée lorsque la vitesse de moteur commence à diminuer ; et
un premier moyen de correction (71) destiné à corriger la quantité d'injection de base calculée sur la base d'une différence entre la vitesse de moteur maximale et la vitesse de moteur détectée pendant une période pendant laquelle la vitesse de moteur détectée commence à diminuer depuis la vitesse de moteur maximale jusqu'au moment où la vitesse du moteur commence à augmenter.

2. Appareil selon la revendication 1, **caractérisé en ce que** la correction effectuée par le premier moyen de correction est exécutée en augmentant la quantité de carburant injecté depuis le moyen d'injection conformément à la différence entre la vitesse de moteur maximale et la vitesse de moteur détectée, le degré d'augmentation étant établi pour devenir plus important à mesure que la différence devient plus importante.

3. Appareil selon la revendication 2, **caractérisé en ce qu'**un deuxième moyen de correction (71) destiné à corriger encore la quantité d'injection de base en soustrayant une quantité prédéterminée de la quantité d'injection de base corrigée par le premier moyen de correction (71) pour inclure la quantité d'injection de base à l'intérieur d'une plage qui empêche les émissions indésirables provenant du moteur (1).

4. Appareil selon la revendication 3, **caractérisé en ce que** la quantité prédéterminée soustraite par le deuxième moyen de correction (71) est établie pour diminuer progressivement en fonction du temps écoulé à partir du début de la correction par le premier moyen de correction.

5. Appareil selon la revendication 3, **caractérisé en ce que** la quantité prédéterminée soustraite par le deuxième moyen de correction (71) est établie pour ne pas dépasser la quantité de carburant ajouté par le premier moyen de correction (71).

6. Appareil selon la revendication 3, **caractérisé par** un moyen d'interdiction (71) interdisant la correction par le deuxième moyen de correction (71) lorsqu'il est déterminé que la quantité d'injection de base corrigée par le premier moyen de correction (71) se situe à l'intérieur d'une plage qui empêche les émissions indésirables provenant du moteur (1).

7. Appareil selon l'une quelconque des revendications précédentes, **caractérisé par** un troisième moyen de calcul (71) destiné à calculer un cycle de variation de la vitesse du moteur et une valeur de corrélation de ce cycle de variation, et un moyen de retardement (71) destiné à retarder le lancement de la correction par le premier moyen de correction (71) d'un temps prédéterminé correspondant au cycle de variation ou à la valeur de corrélation du cycle de variation, qui est calculé après que le deuxième moyen de calcul (71) ait calculé la vitesse de moteur maximale.

8. Appareil selon l'une quelconque des revendications précédentes, **caractérisé par** un moyen de transmission (52) destiné à transmettre la puissance produite par le moteur (1) à une roue d'entraînement (53), le moyen de transmission changeant la vitesse du moteur entre une pluralité de plages, et un moyen de modification destiné à modifier la période de correction de la quantité d'injection de base du premier moyen de correction (71) en fonction de la plage du moyen de transmission.

9. Appareil selon l'une quelconque des revendications précédentes, **caractérisé en ce qu'**un moyen de renouvellement destiné à renouveler la vitesse de moteur maximale calculée avec la vitesse de moteur détectée lorsque la vitesse de moteur commence à augmenter.
